# EUROPÄISCHE PATENTSCHRIFT

(11) **EP 3 402 738 B1**
(45) Veröffentlichungstag und Bekanntmachung des Hinweises auf die Patenterteilung: **15.11.2023**
(21) Anmeldenummer: 17700344.9
(22) Anmeldetag: 12.01.2017
(51) Int. Cl.: B67D 1/08

(54) **KARTUSCHENAUFNAHME, KARTUSCHENSYSTEM, GETRÄNKEZUBEREITUNGSMASCHINE UND VERFAHREN ZUR HERSTELLUNG EINES GETRÄNKS**
CARTRIDGE RECEPTACLE, CARTRIDGE SYSTEM, BEVERAGE PREPARATION MACHINE, AND METHOD FOR PRODUCING A BEVERAGE
LOGEMENT DE CARTOUCHE, SYSTÈME DE CARTOUCHE, MACHINE DE PRÉPARATION DE BOISSON ET PROCÉDÉ DE PRÉPARATION DE BOISSON

(30) Priorität: 12.01.2016 DE 102016200254; 01.07.2016 DE 102016212012; 01.07.2016 DE 102016212013; 27.09.2016 DE 102016218509; 27.09.2016 DE 102016218507; 29.09.2016 DE 102016218884
(43) Veröffentlichungstag der Anmeldung: 21.11.2018
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE); FISCHER, Daniel, 8590 Romanshorn (CH)
(74) Vertreter: Loock, Jan Pieter
(86) Internationale Anmeldenummer: PCT/EP2017/050566
(87) Internationale Veröffentlichungsnummer: WO 2017/121801

(56) Entgegenhaltungen:
- EP-A1- 1 806 314
- EP-A1- 2 017 221
- DE-U1- 29 825 074
- US-A1- 2002 130 140

## Beschreibung

### Stand der Technik

Die vorliegende Erfindung geht aus von einem in eine Getränkezubereitungsmaschine einsetzbare Kartuschenaufnahme zur Herstellung eines Getränks, insbesondere eines Kaltgetränks, aufweisend eine Kartusche, die ein mit einer Getränkesubstanz gefülltes Reservoir aufweist, wobei die Kartusche reversibel in die Kartuschenaufnahme einsetzbar ist und mit ihr verbunden werden kann. Die Kartuschenaufnahme umfasst ferner eine Kartuschenentladeeinrichtung, welche ein zumindest teilweises Überführen der Getränkesubstanz vom Reservoir in eine Mischkammer bewirkt.

Solche Systeme sind aus dem Stand der Technik, beispielsweise aus EP 1 806 314 A1, US 2002/130140 A1 und EP 2 017 221 A1, grundsätzlich bekannt und werden zur Herstellung von Getränken aus vorportionierten Kartuschen verwendet. Die Herstellung von Getränken mit solchen Systemen ist für den Anwender äußerst komfortabel, da er lediglich eine Kartusche einsetzen und einen Startknopf drücken muss. Die Getränkezubereitungsmaschine übernimmt dann vollautomatisiert die Erzeugung desselben, das heißt insbesondere, dass die Getränkesubstanz mit einer vorbestimmten Menge an Flüssigkeit, insbesondere kaltem und karbonisiertem Wasser vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann.

Eine große Herausforderung bei solchen Systemen ist, während der Herstellung des Getränks eine Rückkontamination der Getränkezubereitungsmaschine sicher und vollständig zu unterbinden, da andernfalls die Gefahr einer Verunreinigung bis hin zur Schimmelpilzbildung innerhalb der Getränkezubereitungsmaschine besteht. Dies gilt insbesondere für Kartuschen die fruchtzuckerhaltige, alkoholhaltige oder milchhaltige Getränkesubstanzen enthalten.

Bei aus dem Stand der Technik bekannten Systemen wird üblicherweise die Kartusche in eine als fester Bestandteil der Getränkezubereitungsmaschine ausgebildete Kartuschenaufnahme eingesetzt und sodann die Kartusche auf beiden Seiten, d.h. auf einer Einlassseite und auf einer Auslassseite geöffnet. Auf der Einlassseite wird anschließend mittels einer Fluidzuführung Wasser in die Kartusche eingeleitet, so dass sich das Getränk durch Vermischen der Getränkesubstanz mit dem Wasser schon innerhalb des Reservoirs in der Kartusche bildet. Auf der Auslassseite verlässt das Getränk die Kartusche und wird zu einem Trinkgefäß geleitet. Das Wasser durchströmt das Reservoir hierbei vollständig und bewirkt somit ein Ausleiten der Getränkesubstanz aus dem Reservoir.

Es hat sich gezeigt, dass beim Einleiten des Wassers direkt in das mit der Getränkesubstanz gefüllte Reservoir eine Rückkontamination der Zuführung nicht vollständig verhindert werden kann, weil das Reservoir üblicherweise vollständig mit der Getränkesubstanz gefüllt ist und dadurch beim Einleiten des Wassers ein erheblicher Druckanstieg im Reservoir stattfindet. Sowohl dieser Druckanstieg im Reservoir als auch das Durchspülen des Reservoirs sorgt dafür, dass während und/oder kurz nach der Getränkeherstellung kleinste Tropfen, Partikel und/oder Schwebestoffe der Getränkesubstanz in die Fluidzuführung gelangen und dort zu einer kontinuierlichen Verunreinigung der Getränkezubereitungsmaschine führen.

### Offenbarung der Erfindung

Es ist daher eine Aufgabe der vorliegenden Erfindung eine Kartuschenaufnahme, ein Kartuschensystem, eine Getränkezubereitungsmaschine und ein Verfahren zur Herstellung eines Getränks durch Einsetzen des Kartuschensystems in eine Getränkezubereitungsmaschine zur Verfügung zu stellen, bei welchem eine Rückkontamination der Getränkezubereitungsmaschine wirksam vermieden wird.

Diese Aufgabe wird durch eine Kartuschenaufnahme gemäß Anspruch 1 und ein Kartuschensystem nach Anspruch 9 gelöst.

Die erfindungsgemäße Kartuschenaufnahme und das erfindungsgemäße Kartuschensystem haben gegenüber dem Stand der Technik den Vorteil, dass die Fluidzuführung anders als beim Stand der Technik nicht in das Reservoir der Kartusche, sondern in die vom Reservoir separierte Mischkammer mündet. Hierdurch wird wirksam und in einer einfach und kostengünstig zu realisierenden Weise verhindert, dass durch die Fluidzuführung eine Rückkontamination der Getränkezubereitungsmaschine erfolgt. Hierfür wird das Reservoir nicht von dem Fluid durchspült, sondern gemäß der vorliegenden Erfindung gelangen die Getränkesubstanz und das Fluid getrennt voneinander in die Mischkammer. Das Fluid wird direkt in die Mischkammer geleitet, während die Getränkesubstanz durch die Kartuschenentladeeinrichtung und unabhängig vom Fluid in die Mischkammer überführt wird. Es hat sich gezeigt, dass hierdurch eine Rückkontamination der Getränkezubereitungsmaschine in einer im Vergleich zum Stand der Technik deutlich wirksameren Art und Weise unterbunden wird, insbesondere da im Reservoir kein direkt auf die Fluidzuführung wirkender Überdruck erzeugt wird. Die Ausbildung der Mischkammer in der Kartuschenaufnahme, die in die Getränkezubereitungsmaschine reversibel einsetzbar ist, sorgt vorteilhafterweise dafür, dass die Mischkammer Teil des austauschbaren Kartuschensystem ist. Auf diese Weise wird eine Verunreinigung der Getränkezubereitungsmaschine durch die Getränkesubstanz wirksam vermieden, weil lediglich Teile des austauschbaren Einweg- oder Mehrwegkartuschensystems mit der Getränkesubstanz in Kontakt gelangen. Denkbar ist auch, dass die Kartusche bei jedem Getränkeherstellungsvorgang ausgetauscht wird, während die Kartuschenaufnahme für mehrere Getränkeherstellungsvorgänge verwendet wird, bevor auch sie ausgetauscht wird. Vorzugsweise ist das Reservoir des Kartuschensystems durch ein Dichtelement verschlossen, welches erst beim oder nach dem Einsetzen des Kartuschensystems in die Getränkezubereitungsmaschine geöffnet wird. Das Dichtelement dient dazu, die Kartusche beim Transport oder der Lagerung aromadicht zu verschließen, wodurch beispielsweise eine lange Haltbarkeit der Kartusche zu erzielen ist.

Vorteilhafte Ausgestaltungen und Weiterbildungen der Erfindung sind den Unteransprüchen, sowie der Beschreibung unter Bezugnahme auf die Zeichnungen entnehmbar.

Gemäß der vorliegenden Erfindung ist vorgesehen, dass die Kartusche lösbar mit der Kartuschenaufnahme verbunden ist bzw. die Kartuschenaufnahme lösbar mit der Kartusche verbindbar ist. 2. Es ist die Kartuschenaufnahme reversibel an der Kartusche befestigt, besonders bevorzugt durch eine Rastverbindung. Denkbar ist beispielsweise, dass die Kartusche eine Art Flaschenhals (aufweisend die Kartuschenöffnung) mit einem umlaufenden Halteflansch umfasst und die Kartuschenaufnahme auf den Flaschenhals geclipst wird. Dabei hintergreifen insbesondere elastische Rastelemente, wie beispielsweise Halteärmchen den Halteflansch. Die Kartusche ist insbesondere als Einmalbehältnis für die Getränkesubstanz vorgesehen, insbesondere recycelbar. Vorteilhafterweise kann die Kartuschenaufnahme mehrfach verwendet werden, indem sie an verschiedenen Kartuschen befestigbar ist. Zudem wird die Herstellung des Kartuschensystem vereinfacht, da die Kartusche und die Kartuschenaufnahme separat hergestellt werden können und lediglich die Kartuschenaufnahme anschließend auf die Kartusche aufgeclipst wird. Die Kartusche umfasst insbesondere eine eckige, runde oder abgerundete Flasche. Die Kartusche ist insbesondere aus Kunststoff in einem Blas-Spritzform-Formverfahren oder in einem Spritzformverfahren oder mit weiteren Formverfahren hergestellt. Grundsätzlich wäre aber auch ein Tiefziehverfahren zur Herstellung der Kartusche vorstellbar. Ebenso wäre es natürlich auch denkbar, dass die Kartusche mehrfach verwendbar ist. Im Prinzip wäre es auch denkbar, dass die Kartusche eine Glasflasche umfasst, während nur die Kartuschenaufnahme ein Kunststoffteil ist.

Gemäß der vorliegenden Erfindung ist vorgesehen, dass die Kartuschenentladeeinrichtung einen Druckluftanschluss zum Anschluss an die Druckluftquelle und eine Druckluftleitung umfasst, welche sich vom Druckluftanschluss zu einem Druckluftauslass erstreckt, und wobei der Druckluftauslass insbesondere in Richtung des Reservoirs der Kartusche vorsteht, um Druckluft in das Reservoir einzublasen. Die in die Kartuschenaufnahme integrierte Kartuschenentladeeinrichtung umfasst im Sinne der vorliegenden Erfindung also zunächst nur eine Druckluftleitung, durch welche Druckluft von außen in das Reservoir eingeleitet werden kann. Das Kartuschensystem ist derart ausgebildet, dass durch die Druckluft die Getränkesubstanz aus dem Reservoir in die Mischkammer gedrückt wird. Die Druckluft wird insbesondere von der Getränkezubereitungsmaschine bereitgestellt. Denkbar ist, dass eine Druckluftquelle direkt an den Druckluftanschluss angekoppelt wird, sobald das Kartuschensystem in die Getränkezubereitungsmaschine eingesetzt wird. Dies hat den Vorteil, dass eine Rückkontamination in Richtung der Getränkezubereitungsmaschine wirksam vermieden wird, weil die Kartuschenentladeeinrichtung sofort beim Einsetzen des Kartuschensystems unter Druck steht und somit verhindert wird, dass Getränkesubstanz in Richtung der Druckluftleitung und insbesondere in Richtung der Druckluftquelle der Getränkezubereitungsmaschine wandert. Die Getränkesubstanz kann sich ausgehend vom Reservoir somit lediglich in Richtung der Mischkammer bewegen.

Gemäß einer bevorzugten Ausführungsform der vorliegenden Erfindung ist vorgesehen, dass die Mischkammer einen Getränkeauslauf aufweist, durch welchen das aus einer Vermischung der Getränkesubstanz mit dem Fluid gebildete Getränk abgegeben wird, wobei das Kartuschensystem vorzugsweise derart ausgebildet ist, dass das Getränk aus dem Getränkeauslauf direkt in ein portables Gefäß einleitbar ist. In vorteilhafter Weise gerät somit weder die Getränkesubstanz noch das erzeugte Getränk in Kontakt mit einem Teil der Getränkezubereitungsmaschine, so dass nahezu jegliche (Rück-)Kontamination der Getränkezubereitungsmaschine verhindert wird. Das Fluid wird der Mischkammer separat zugeführt.

Das Fluid kann unter Druck in die Mischkammer eingeleitet werden.

Das Fluid wird insbesondere von der Getränkezubereitungsmaschine bereitgestellt. Denkbar ist, dass eine Fluidquelle direkt an einen entsprechenden Fluidanschluss der Kartuschenaufnahme angekoppelt wird, sobald das Kartuschensystem in die Getränkezubereitungsmaschine eingesetzt wird. Der Fluidanschluss steht dabei über eine Fluidleitung in Fluidverbindung mit der Mischkammer. Dies hat den Vorteil, dass eine Rückkontamination in Richtung der Getränkezubereitungsmaschine wirksam vermieden wird, weil der Fluidanschluss sofort beim Einsetzen des Kartuschensystems unter Druck steht und somit verhindert wird, dass Getränkesubstanz in Richtung der Fluidleitung und insbesondere in Richtung der Fluidquelle der Getränkezubereitungsmaschine wandert. Die Getränkesubstanz und das Getränk kann sich ausgehend von der Mischkammer somit lediglich in Richtung des Getränkeauslasses bewegen. Das Fluid umfasst insbesondere Wasser, vorzugsweise unter Druck stehendes, gekühltes und/oder karbonisiertes Trinkwasser.

Es ist denkbar, dass die Mischkammer mit Mischstrukturen versehen ist. Die Mischstrukturen sorgen in vorteilhafter Weise für eine verbesserte Durchmischung von Getränkesubstanz und Fluid. Hierfür sind die Mischstrukturen insbesondere derart ausgebildet, dass das in die Mischkammer einströmende Fluid verwirbelt wird. Denkbar ist, dass die Mischstruktur einen oder mehrere Mischstege umfasst, welche im Bereich der Fluidzuführung am Boden der Mischkammer angeordnet sind und sich im Wesentlichen senkrecht zum Einströmrichtung des Fluides erstrecken. Die Mischstege fungieren somit als Barrieren für das Fluid, wodurch das Fluid aufgewirbelt wird und eine bessere Durchmischung mit der Getränkesubstanz erzielt wird.

Gemäß einer bevorzugten Ausführungsform der vorliegenden Erfindung ist vorgesehen, dass die Fluidzuführung mit Fluid gespeist wird, welches durch ein Kühlaggregat gekühlt wird, wobei das Kühlaggregat Teil der Getränkezubereitungsmaschine oder eines mit der Getränkezubereitungsmaschine in Wirkverbindung stehenden separaten Kühlschranks ist. In vorteilhafter Weise sind somit Kaltgetränke herstellbar, auch wenn die Kartusche nicht gekühlt ist und beispielweise Zimmertemperatur aufweist. Die Integration des Systems in einen bestehenden Kühlschrank hat den Vorteil, dass das bestehende Kühlaggregat des Kühlschranks für die Getränkezubereitungsmaschine in effizienter Weise einfach mitgenutzt werden kann. Insbesondere bei sogenannten "side-by-side"-Kühlschränken (oft auch als amerikanische Kühlschränke bezeichnet) findet sich in der Front ausreichend Bauraum zur Integration des Systems. Denkbar ist, dass es sich bei der Getränkezubereitungsmaschine um ein Nachrüstset für einen solchen Kühlschrank handelt. Das Kühlaggregat umfasst vorzugsweise eine Kompressorkühleinheit, eine Absorberkühleinheit oder einen thermoelektrischen Kühler.

Gemäß einer weiteren bevorzugten Ausführungsform der vorliegenden Erfindung ist vorgesehen, dass die Fluidzuführung mit Fluid gespeist wird, welches durch einen Karbonisierer mit Kohlensäure versetzt wird. Denkbar ist, dass der Karbonisierer Teil der Getränkezubereitungsmaschine ist und wobei der Karbonisierer eine Aufnahme für eine CO₂-Patrone und eine Zuführeinrichtung zum Versetzen des Fluides mit CO₂ aus der CO₂-Patrone aufweist. Vorteilhafterweise lassen sich mit dem System somit auch mit Kohlensäure versetzte Erfrischungsgetränke herstellen. Alternativ wäre auch denkbar, dass der Karbonisierer einen externen CO₂-Anschluss aufweist.

Es ist möglich, dass die Kartuschenaufnahme im Wesentlichen einteilig ausgebildet ist. Im Sinne der vorliegenden Erfindung bedeutet eine einteilige Ausführung der Kartuschenaufnahme insbesondere nicht, dass die Kartuschenaufnahme zwingend nur aus einem einzigen Teil bestehen soll, sondern lediglich, dass die Kartuschenaufnahme in dieser speziellen einteiligen Ausführungsform nicht aus einem Deckelelement und separaten Auslaufelement besteht. Mit anderen Worten: Deckelement und Auslaufelement sind in der einteiligen Ausführungsform einteilig ausgebildet. Auch die einteilige Ausführungsform kann zusätzliche separate Elemente, wie beispielsweise den separaten Aufstechdorn (siehe unten) aufweisen.

Gemäß einer bevorzugten Ausführungsform der vorliegenden Erfindung ist vorgesehen, dass die Kartusche eine mit dem Reservoir in Fluidverbindung stehende Kartuschenöffnung aufweist, wobei die Kartuschenöffnung mit einem Dichtelement verschlossen ist, wobei das Dichtelement insbesondere eine Dichtfolie umfasst, die auf den Rand der Kartuschenöffnung aufgebraucht und vorzugsweise aufgesiegelt ist. In dieser Ausführungsform ist die Kartuschenaufnahme insbesondere einteilig ausgebildet, d.h. es gibt lediglich keine separaten Auslauf- und Deckelelemente. Zur Herstellung dieses Kartuschensystems wird zunächst die Kartusche mit der Kartuschenöffnung erzeugt, dann die Kartusche durch die Kartuschenöffnung mit der Getränkesubstanz befüllt, anschließend die Kartuschenöffnung durch das Dichtelement verschlossen und zuletzt die Kartuschenaufnahme auf die Kartusche im Bereich der verschlossenen Kartuschenöffnung aufgeclipst. Vor, während oder nach dem Einsetzen des Kartuschensystems in die Getränkezubereitungsmaschine muss das Dichtelement im Bereich der Kartuschenöffnung geöffnet werden, beispielsweise durch Perforieren der Dichtfolie, damit die Getränkesubstanz durch Einleiten der Druckluft vom Reservoir in die Mischkammer überführt werden kann.

In einer besonders bevorzugten Ausführung der Erfindung umfasst die Kartuschenaufnahme eine Dornführung und einen innerhalb der Dornführung verschiebbar gelagerten Aufstechdorn. Der Aufstechdorn ist zwischen einer eingefahrenen Position, in welcher der Aufstechdorn von dem Dichtelement beabstandet ist, und einer ausgefahrenen Position, in welcher der Aufstechdorn das Dichtelement durchsticht und bis in das Reservoir ragt, gegenüber der Dornführung verschiebbar gelagert. Die Außenwandung des Aufstechdorns ist mit wenigstens einem Seitenkanal zum Leiten der Getränkesubstanz in Richtung der Mischkammer, wenn das Dichtelement durchstochen ist, versehen. Durch den seitlich am Aufstechdorn ausgebildeten Seitenkanal kann die Getränkesubstanz dann an dem Dichtelement vorbei in Richtung Mischkammer fließen. Vorzugsweise sind eine Mehrzahl von Seitenkanälen am Aufstechdorn ausgebildet. Die Seitenkanäle sind insbesondere jeweils in Form einer einseitig offenen Nut ausgebildet.

Denkbar ist, dass der Querschnitt der Seitenkanäle und/oder die Anzahl der Seitenkanäle an die Viskosität der Getränkesubstanz angepasst ist, so dass die Seitenkanäle den Fluss der Getränkesubstanz in Richtung Mischkammer kontrollieren bzw. begrenzen. Bei einer hohen Viskosität werden mehrere Seitenkanäle oder Seitenkanäle mit größerem Querschnitt verwendet, während bei einer niedrigeren Viskosität weniger Seitenkanäle oder Seitenkanäle mit geringerem Querschnitt vorgesehen sind. Für jede Kartusche existiert somit eine passende Kartuschenaufnahme.

Vorzugsweise ist bei dieser Ausführung in den Aufstechdorn die Druckluftleitung integriert.

Die Druckluftleitung mündet durch eine feststehende Druckluftspitze am Ende des Aufstechdorns in die Kartuschenöffnung. An einer dem Reservoir insbesondere abgewandten Seite des Aufstechdorns ist der Druckluftanschluss ausgebildet ist, wobei der Druckluftanschluss vorzugsweise von außerhalb der Kartuschenaufnahme zugänglich ist. Vorzugsweise wird der Aufstechdorn beim Einsetzen des Kartuschensystems in die Getränkezubereitungsmaschine von einem Auslöseelement der Getränkezubereitungsmaschine von der eingefahrenen Position in die ausgefahrene Position überführt wird. Vorzugsweise wird dabei bereits Druckluft an die Druckluftspitze angelegt, um eine etwaige Rückkontamination der Getränkezubereitungsmaschine zu verhindern. Alternativ wird die Druckluftspitze durch die über die Getränkezubereitungsmaschine angelegte Druckluft von der eingefahrenen Position in die ausgefahrene Position verfahren.

Es ist denkbar, dass die Kartusche auf einer der Kartuschenöffnung gegenüberliegenden Seite eine weitere Kartuschenöffnung aufweist, welche durch ein weiteres Dichtelement, insbesondere eine weitere Dichtfolie, verschlossen ist. In vorteilhafter Weise kann die Kartusche somit auch in einem günstigen Spritzformverfahren hergestellt werden.

Es ist denkbar, dass die Kartusche und/oder die Kartuschenaufnahme eine Produktidentifikationskennung aufweist und die Getränkezubereitungsmaschine oder die Kartuschenaufnahme einen Kennungsdetektor zum Identifizieren der Produktidentifikationskennung aufweist. Vorzugsweise ist die Produktidentifikationskennung in einen Barcode, einen RFID-Code, einen QR-Code, einen Data-Matrix-Code, einen Farbcode, einen Hologrammcode oder dergleichen eingebettet. In vorteilhafter Weise wird somit ein automatisches Auslesen der Produktidentifikationskennung möglich. Der Kennungsdetektor umfasst insbesondere einen optischen Sensor, wie beispielsweise eine CCD-Kamera, welche den Barcode oder QR-Code oder Data-Matrix-Code automatisch ausliest, wenn die Kartusche in die Getränkezubereitungsmaschine eingesetzt ist. Alternativ umfasst der Kennungsdetektor eine Sende- und Empfangsantenne zum automatischen Auslesen der RFID-Codes. Alternativ wäre denkbar, dass die Produktidentifikationskennung auch in andere automatisch auslesbare Computerchips eingebettet wird. Der Begriff QR-Code umfasst im Sinne der vorliegenden Erfindung insbesondere jedweden Data-Matrix-Code. Insofern werden die Begriff QR-Code und Data-Matrix-Code synonym verwendet. Alternativ oder zusätzlich wäre auch denkbar, dass die Produktidentifikationskennung einen Strichcode, einen Punktcode, einen Binärcode, einen Morsecode, Braillezeichencode (Blindenschrift) oder dergleichen umfasst. Der Code kann dabei auch in eine dreidimensionale Struktur, wie beispielweise ein Relief eingebettet sein. Die Produktidentifikationskennung umfasst insbesondere die sogenannte Produktidentifikationsnummer, insbesondere einen Universal Product Code (UPC), eine European Article Number (EAN), einen GS1-Code, eine Global Trade Item Number (GTIN) oder dergleichen. Auf diese Weise braucht hierfür kein neues Codesystem eingeführt werden. Insbesondere läuft die Produktidentifikationskennung unter dem GS1-Standard.

Die Produktidentifikationskennung dient insbesondere dazu, die in der Kartusche befindliche Getränkesubstanz anzugeben. Während oder vor dem Start des Getränkezubereitungsprozesses wird die Produktidentifikationskennung mit dem Kennungsdetektor ausgelesen. Auf Seiten der Getränkezubereitungsmaschine ist somit bekannt, welche Art von Kartusche in die Getränkezubereitungsmaschine eingelegt ist. Denkbar ist, dass eine Auswerte- und Steuereinheit der Getränkezubereitungsmaschine eine Vielzahl von vorgespeicherten Getränkeherstellungsprogrammen aufweist, welche zur Zubereitung unterschiedlicher Getränke vorgesehen sind und sich beispielsweise in der Fördermenge, Förderzeit, Förderpausen, Temperatur, Karbonisierungsgrad und/oder Druck des zugeführten Fluids voneinander unterscheiden. Denkbar ist auch, dass bei verschiedenen Getränkeherstellungsprogrammen unterschiedliche Druckluftzufuhren Verwendung finden (bspw. anderer Druck). Jedes Getränkeherstellungsprogramm ist mit einem oder mehreren Produktidentifikationskennungen verknüpft. Wenn eine Kartusche in die Getränkezubereitungsmaschine eingelegt wird, wird die Produktidentifikationskennung auf der Kartusche mit dem Kennungsdetektor ausgelesen und anschließend mit den vorgespeicherten Daten verglichen. Anhand der Produktidentifikationskennung wird somit ein Getränkeherstellungsprogramm aus der Mehrzahl von vorgespeicherten Getränkeherstellungsprogrammen ausgewählt und anschließend der Getränkeherstellungsprozess mit dem ausgewählten Getränkeherstellungsprogramm gestartet. Die Parameter wie Fördermenge, Förderzeit, Förderpausen, Temperatur, Karbonisierungsgrad und/oder Druck des zugeführten Fluids werden durch das ausgewählte Getränkeherstellungsprogramm vorgegeben bzw. gesteuert, um für das mit der jeweiligen Getränkesubstanz herzustellende Getränk optimale Ergebnisse zu erzielen.

Denkbar ist, dass der Getränkeherstellungsprozess gar nicht erst startet, wenn keine Produktidentifikationskennung identifizierbar ist oder die identifizierte Produktidentifikationskennung zu keinem vorgespeicherten Getränkeherstellungsprogramm passt. Auf diese Weise wird verhindert, dass eine systemfremde Kartusche in der Getränkeherstellungsmaschine verwendet wird, welche für den Betrieb in der Getränkeherstellungsmaschine nicht zertifiziert ist und somit die Gefahr einer Beschädigung der Getränkeherstellungsmaschine oder einer Gefährdung des Benutzers, beispielsweise durch ein Aufplatzen der Kartusche (wenn diese für den Betrieb bei geringeren Drücken vorgesehen ist), bestünde.

Die Produktidentifikationskennung ist vorzugsweise auf die Wandung der Kartusche oder auf das Dichtelement (insbesondere die Dichtfolie) zum Abdichten der Kartuschenöffnung aufgedruckt oder aufgeklebt. Insbesondere ist die Produktidentifikationskennung derart auf der Kartusche positioniert, dass die Produktidentifikationskennung innerhalb des Detektionsbereichs des Kennungsdetektors der Getränkezubereitungsmaschine angeordnet ist, wenn die Kartusche in die Getränkezubereitungsmaschine eingesetzt ist. Alternativ wäre auch denkbar, dass die Produktidentifikationskennung nicht auf der Kartusche, sondern auf einer Außenwandung der Kartuschenaufnahme entsprechend angeordnet ist.

Ein weiterer Gegenstand der vorliegenden Erfindung zur Lösung der eingangs gestellten Aufgabe ist eine Getränkezubereitungsmaschine, in welche das erfindungsgemäße Kartuschensystem einsetzbar ist, wobei die Getränkezubereitungsmaschine eine Halteeinheit aufweist, in welche die mit der Kartusche verbundene Kartuschenaufnahme einsetzbar ist, eine Fluidquelle zum Einspeisen des Fluid in die Fluidzuführung und eine Druckluftquelle zum Einblasen von Druckluft in den Druckluftanschluss. Die Getränkezubereitungsmaschine kann das Auslöseelement zum Überführen der Aufstechdorns von der eingefahrenen Position in die ausgefahrene Position aufweisen.

Das Auslöseelement kann feststehend ausgebildet sein, so dass durch eine Bewegung der Kapselaufnahme relativ zum Auslöseelement der Aufstechdorn von der eingefahrenen Position in die ausgefahrene Position überführt wird. Die Halteeinheit umfasst hierfür insbesondere einen Befestigungsflansch umfasst, welcher die Kartuschenaufnahme beim oder nach dem Einsetzen in die Halteeinheit umgreift, und wobei der Befestigungsflansch mit einer manuell oder motorisch betriebenen Auslösemechanik gekoppelt ist, welche zum Verschieben des Befestigungsflansches derart vorgesehen ist, dass eine Relativbewegung zwischen Kapselaufnahme und dem in Kontakt mit dem Aufstechdorn stehenden Auslöseelement erzeugt wird, wodurch der Aufstechdorn von der eingefahrenen Position in die ausgefahrene Position überführt wird. Die Kartuschenaufnahme wird von dem Befestigungsflansch also gegen das feststehende Auslöseelement bewegt, so dass das feststehende Auslöseelement gegen den Aufstechdorn drückt und diesen von der eingefahrenen Position in die ausgefahrene Position verfährt. Hierdurch wird die Dichtfolie perforiert und der Getränkeherstellungsprozess beginnt.

Wenn die Getränkezubereitungsmaschine eine Auswerte- und Steuereinheit aufweist, dann ist diese mit dem Kennungsdetektor gekoppelt und zum Bestimmen der Produktidentifikationskennung durch Analyse des detektierten QR-Codes vorgesehen. Vorzugsweise ermittelt die Auswerteelektronik aus dem QR-Code den GS1-Code, welcher eine eindeutige Identifizierung der in der Getränkezubereitungsmaschine angeordneten Kartusche erlaubt. Die Getränkezubereitungsmaschine weist vorzugsweise ferner eine Vergleichseinheit auf, welche zum Vergleichen der bestimmten Produktidentifikationskennung mit einer Liste von vorgespeicherten Produktidentifikationskennungen vorgesehen ist und anhand des Vergleichs ein Getränkeherstellungsprogramm auswählt. Alternativ ist denkbar, dass die Getränkezubereitungsmaschine eine Algorithmus-Erkennung aufweist, welche anhand eines Algorithmus erkennt, ob der detektierte QR-Code systemzugehörig (also bekannt) oder systemfremd ist. Der Algorithmus funktioniert dabei nach den bekannten kryptographischen Ver-/Entschlüsselungsverfahren.

Ein weiterer Gegenstand der vorliegenden Erfindung zur Lösung der eingangs gestellten Aufgabe ist ein Verfahren zur Herstellung eines Getränks mit dem erfindungsgemäßen Kartuschensystem aufweisend die folgenden Schritte: Einsetzen des Kartuschensystems in eine Halteeinheit einer Getränkezubereitungsmaschine; Überführen der Getränkesubstanz aus dem Reservoir der Kartusche in die Mischkammer der Kartuschenaufnahme mittels der Kartuschenentladeeinrichtung; Einspeisen eines Fluides in die Mischkammer mittels der Fluidzuführung; und Ableiten des in der Mischkammer durch Vermischung der Getränkesubstanz mit dem Fluid erzeugten Getränks mittels eines Getränkeauslaufs. Vorzugsweise wird dabei die Getränkesubstanz durch Druckluft aus dem Reservoir in die Mischkammer überführt.

Die vorstehend aufgeführten Verfahrensschritte sind nicht als zwingende zeitliche Abfolge zu betrachten. Vorzugsweise werden beispielsweise die Betätigung der Kartuschenentladeeinrichtung und die Einspeisung des Fluides parallel durchgeführt.

Vorzugsweise wird das Fluid vor dem Einspeisen in die Mischkammer gekühlt und/oder karbonisiert wird, so dass Kaltgetränke und kohlensäurehaltige Softdrinks herstellbar sind.

Es kann vorgesehen werden, dass vor, beim oder nach dem Einsetzen des Kartuschensystems in die Halteeinheit ein Aufstechdorns der Kartuschenaufnahme von einer eingefahrenen Position in eine ausgefahrene Position überführt wird und somit von dem Aufstechdorn ein Dichtelement an der Kartuschenöffnung perforiert wird. In vorteilhafter Weise wird das Reservoir somit automatisch geöffnet, so dass ein Überführen der Getränkesubstanz in die Mischkammer erfolgen kann. Vorzugsweise wird während des Öffnungsvorgangs bereits Druckluft und Fluid in die Kartuschenaufnahme eingeleitet, so dass eine Rückkontamination der Getränkezubereitungsmaschine durch Getränkesubstanz verhindert wird.

Es wird der Aufstechdorn von einem Auslöseelement der Getränkezubereitungsmaschine von der eingefahrenen Position in die ausgefahrene Position überführt, wobei die Kartuschenaufnahme vorzugsweise derart gegen das feststehende Auslöseelement bewegt wird, dass der Aufstechdorn von der eingefahrenen Position in die ausgefahrene Position überführt wird.

Es ist denkbar, dass die Kartuschenaufnahme beim oder nach dem Einsetzen des Kartuschensystems in die Halteeinheit von einem Befestigungsflansch der Halteeinheit umgriffen wird und wobei der Befestigungsflansch von einer manuell oder motorisch betriebenen Auslösemechanik derart betrieben und insbesondere verschoben wird, dass eine Relativbewegung zwischen der Kapselaufnahme und dem in Kontakt mit dem Aufstechdorn stehenden Auslöseelement erzeugt wird, wodurch der Aufstechdorn von der eingefahrenen Position in die ausgefahrene Position überführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- Figur 1: zeigt das Grundprinzip des Verfahrens zur Herstellung eines Getränks mit einer Kartuschenaufnahme und einem Kartuschensystem eingesetzt in eine Getränkezubereitungsmaschine gemäß einer Ausführungsform der vorliegenden Erfindung.
- Figuren 2a bis 2c: zeigen schematische Ansichten einer Kartusche, einer Kartuschenaufnahme und eines Kartuschensystems gemäß einer Ausführungsform der vorliegenden Erfindung.
- Figuren 3a bis 3c: zeigen schematische Ansichten einer Kartuschenaufnahme und eines Kartuschensystems gemäß einer Ausführungsform der vorliegenden Erfindung.
- Figuren 4a und 4b: zeigen schematische Ansichten einer Kartuschenaufnahme und eines Kartuschensystems eingesetzt in eine Halteeinheit einer Getränkezubereitungsmaschine gemäß einer Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

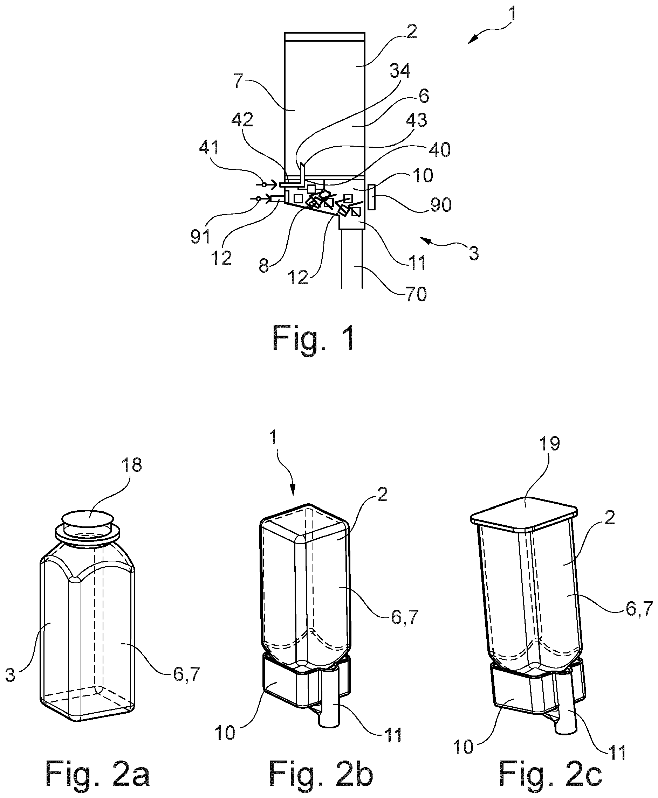

In **Figur 1** ist eine schematische Schnittbildansicht eines erfindungsgemäßen Kartuschensystems 1, welche in eine Getränkezubereitungsmaschine 3 eingesetzt ist und mittels welcher ein Getränk 70 zubereitet wird, gezeigt, um das allgemeine Funktionsprinzip zu illustrieren.

Das vorliegende System umfasst die Getränkezubereitungsmaschine 3 (nur schematisch illustriert), in welche austauschbare Kartuschensysteme 1 einsetzbar sind. Jedes Kartuschensystem 2 weist eine Kartusche 2, die mit einer bestimmten Getränkesubstanz 7 gefüllt sind. Innerhalb der Getränkezubereitungsmaschine 3 wird mit Hilfe der Getränkesubstanz 7 und einer zusätzlichen Wasserquelle, im Folgenden als Fluidquelle 41 bezeichnet, ein entsprechendes Getränk 70 erzeugt. Die Kartusche 2 ist dabei vorzugsweise mit einer vorportionierten Menge an Getränkesubstanz 7, die zur Erzeugung einer gezielten Trinkportion, beispielsweise eine Trinkglasfüllung des gewünschten Getränks 70, notwendig ist, befüllt. Es stehen insbesondere eine Mehrzahl unterschiedlicher Kartuschensysteme 1 zur Verfügung, deren Kartuschen 2 bzw. Reservoirs 6 zur Erzeugung verschiedener Getränke 70 mit unterschiedlichen Getränkesubstanzen 7 befüllt sind. Wenn der Anwender des Systems 1 ein bestimmtes Getränk 70 trinken möchte, braucht er lediglich aus der Mehrzahl der unterschiedlichen Kartuschensysteme 1 dasjenige Kartuschensystem 1, welche die entsprechende Getränkesubstanz 7 zur Erzeugung des gewünschten Getränks 70 enthält, auswählen, in eine Halteeinheit 90 der Getränkezubereitungsmaschine 3 einsetzen und den Getränkeherstellungsprozess an der Getränkezubereitungsmaschine 3 ggf. starten, beispielsweise durch Drücken eines Startknopfs, entsprechendes Berühren eines berührungssensitiven Displays, durch Gestik- oder Sprachsteuerung oder mittels einer geeigneten Applikation auf einem Mobiltelefon. Denkbar ist auch, dass der Getränkeherstellungsprozess automatisch startet, wenn das Einlegen eines neuen Kartuschensystems 1 in die Halteeinheit 90 erkannt wird. In jedem der vorgenannten Fälle wird das gewünschte Getränk 70 sodann automatisch erzeugt, in ein Trinkgefäß geleitet und dem Anwender somit bereitgestellt. Anschließend wird das verbrauchte Kartuschensystem 1 entfernt und entsorgt. Die Getränkezubereitungsmaschine 3 ist nun wieder bereit, mit einem beliebigen neuen Kartuschensystem 1 befüllt zu werden, um ein weiteres Getränk 70 zu erzeugen.

Die Getränkesubstanz 7 umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-)Getränke.

Das Kartuschensystem 1 umfasst eine Kartusche 2 in Form eines zylinderförmigen Behälters mit abgerundeten Ecken. Der Behälter ist hohl und beinhaltet somit ein Reservoir 6 für die Getränkesubstanz 7. Die Kartusche 2 ist insbesondere aus Kunststoff gefertigt und durch ein Blas-Spritzform-Verfahren hergestellt. Die Kartusche 2 weist ferner eine Kartuschenöffnung 63 auf, durch welche das Reservoir 6 mit der flüssigen Getränkesubstanz 7 befüllt wird. Der Boden des Reservoirs 6 ist im vorliegenden Beispiel trichterförmig ausgebildet, wobei im Zentrum des trichterförmigen Bodens die Kartuschenöffnung 63 angeordnet ist. Die Kartusche 2 ist mit einer erfindungsgemäßen Kartuschenaufnahme 10 fest oder reversibel verbunden. Die Kartuschenaufnahme 10 wird insbesondere nach dem Befüllen der Kartusche 2 im Bereich der Kartuschenöffnung 63 auf die Kartusche 2 mittels einer Rastverbindung 50 verbunden. Die Kartuschenaufnahme 10 weist hierfür beispielsweise seitliche Rastelemente 51 in Form von elastischen Halteärmchen oder eine umlaufende Rastleiste auf, welche einen im Bereich der Kartuschenöffnung 63 angeordneten umlaufenden Halteflansch 52 der Kartusche 2 umgreift. Die Kartuschenaufnahme 10 wird nach dem Befüllen der Kartusche 2 auf die Kartusche 2 geclipst.

Die Kartuschenaufnahme 10 weist eine Mischkammer 8 auf, welche während des Getränkeherstellungsprozesses in Fluidverbindung mit dem Reservoir 6 steht, so dass mit Hilfe einer Kartuschenentladeeinrichtung 34 der Kartuschenaufnahme 10 die Getränkesubstanz 7 zumindest teilweise aus dem Reservoir 6 in die Mischkammer 8 überführt werden kann. Die Kartuschenentladeeinrichtung 34 umfasst zu diesem Zweck eine Druckluftleitung 40. Ein Ende der Druckluftleitung 40 ist mit einem Druckluftanschluss 42 verbunden, der mit einer Druckluftquelle 41 der Getränkezubereitungsmaschine 3 verbunden werden kann, um Druckluft in die Druckluftleitung 40 einzuleiten, während das andere Ende in einen Druckluftauslass 43 mündet, der in Richtung des Reservoirs 6 geöffnet ist und Druckluft in das Reservoir 6 einleitet. Das Einleiten der Druckluft bewirkt, dass die Getränkesubstanz 7 in die Mischkammer 8 gedrückt wird.

In die Mischkammer 8 mündet ferner eine Fluidzuführung 12 der Kartuschenaufnahme 10, welche durch eine Fluidquelle 91 der Getränkezubereitungsmaschine 3 gespeist wird. Denkbar ist, dass die Fluidzuführung 12 eine Schnellkupplung aufweist, mit welcher die Fluidzuführung 12 an die Fluidquelle 91 der Getränkezubereitungsmaschine 3 angeschlossen werden kann. Die Schnellkupplung kann beispielsweise derart ausgebildet sein, dass beim Einsetzen des Kartuschensystems 1 in die Halteeinheit 90 automatisch eine Fluidverbindung zwischen der Fluidquelle 91 und der Mischkammer 8 über die Fluidzuführung 12 hergestellt wird. Während des Getränkeherstellungsprozesses gelangt über diese Fluidverbindung Fluid, insbesondere gekühltes und karbonisiertes Trinkwasser, von der Fluidzuführung 12 in die Mischkammer 8. Ferner gelangt während des Getränkeherstellungsprozesses Getränkesubstanz 7 von dem Reservoir 6 in die Mischkammer 8, wie vorstehend beschrieben. Durch Vermischung der Getränkesubstanz 7 mit dem Fluid in der Mischkammer 8 bildet sich das Getränk 70, welches die Mischkammer 8 sodann durch einen Getränkeauslauf 11 verlässt. Die Kartuschenaufnahme 10 weist den Getränkeauslauf 11 auf, durch welchen das innerhalb der Mischkammer 8 erzeugte Getränk 70 die Mischkammer 8 verlässt und insbesondere direkt in das Trinkgefäß (nicht abgebildet) geleitet wird, d.h. ohne dass Teile der Getränkezubereitungsmaschine 3 in Kontakt mit dem Getränk 70 gelangen. Auf diese Weise wird Rückkontamination der Getränkezubereitungsmaschine 3 verhindert. Das Trinkgefäß wird insbesondere direkt unterhalb des Getränkeauslaufs 11 angeordnet.

Nach Beendigung des Getränkeherstellungsprozesses wird das Kartuschensystem 1 aus der Halteeinheit 90 entnommen, so dass die Getränkeherstellungsmaschine 3 mit einem neuen und unverbrauchten Kartuschensystem 1 bestückt werden kann. Die Kartuschenaufnahme 10 kann wiederverwendet werden, indem es von der benutzten Kartusche 2 durch Lösen der Rastverbindung 50 abgetrennt und auf eine neue Kartusche 2 geclipst wird.

In **Figuren 2a bis 2c** sind schematische Ansichten einer Kartusche 2, einer Kartuschenaufnahme 10 und eines Kartuschensystems 1 gemäß einer Ausführungsform der vorliegenden Erfindung illustriert.

Die Kartuschenaufnahme 10 ist auf die Kartusche 2 in oben beschriebener Weise aufgeclipst und weist die Mischkammer 8, den Getränkeauslauf 11, die Kartuschenentladeeinrichtung 34 und die Fluidzuführung 12 auf. Damit die Kartusche 2 während der Lagerung und des Transports des Kartuschensystems 1 aromadicht verschlossen ist, wird bei der vorliegenden Ausführungsform die Kartuschenöffnung 63 mit einem Dichtelement 18 in Form einer dünnen Dichtfolie verschlossen. Nach der Herstellung der Kartusche 2 im Blas-Spritzform-Verfahren wird die Dichtfolie auf den Rand der Kartuschenöffnung 63 geklebt oder gesiegelt (siehe Figur 2a). Erst anschließend wird die Kartuschenaufnahme 10 auf die Kartusche 2 aufgeclipst (siehe Figur 2b).

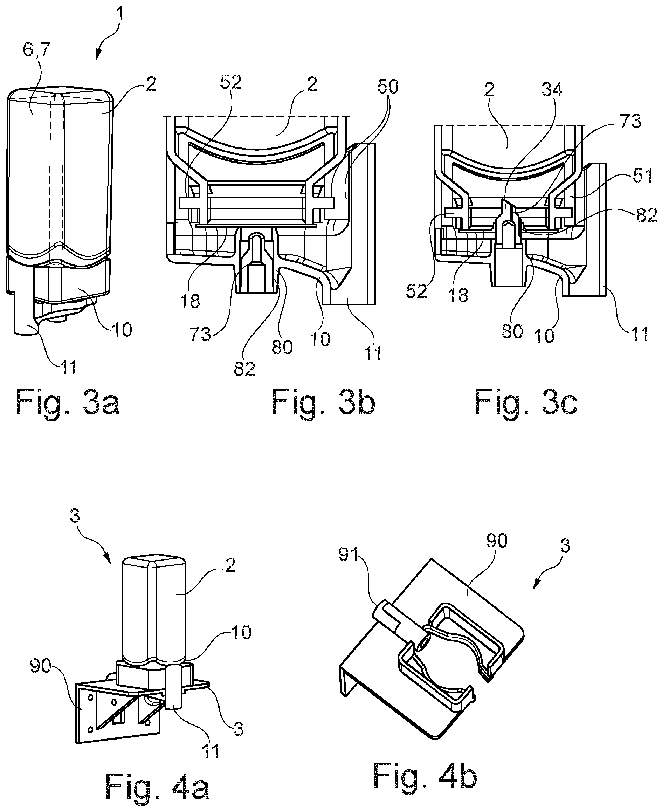

In Figur 2c ist eine Alternative gezeigt, in welcher die Kartusche 2 nicht im Blas-Spritzform-Verfahren, sondern im Spritzform-Verfahren hergestellt ist. Die Kartusche 2 weist hier eine weitere Kartuschenöffnung auf, die durch eine weitere Dichtfolie 19 verschlossen wird, indem die weitere Dichtfolie 19 analog auf den Rand der weiteren Kartuschenöffnung gesiegelt wird. Da hier zwei Siegelschritte notwendig sind, ist diese Alternative jedoch weniger bevorzugt. Die Figuren 4a bis 4c basieren daher wieder auf der in Figuren 2a und 2b gezeigten Kartusche 2.

In **Figuren 3a bis 3c** sind schematische Ansichten einer Kartuschenaufnahme 10 und eines Kartuschensystems 1 gemäß einer Ausführungsform der vorliegenden Erfindung illustriert.

Die Kartuschenaufnahme 10 weist eine Dornführung 80 auf, in welcher ein Aufstechdorn 73 verschiebbar gelagert ist. Das Dichtelement 18 wird durch eine Überführung des verschiebbaren Aufstechdorns 73 zwischen einer eingefahrenen Position, in welcher der Aufstechdorn 73 von dem Dichtelement 18 beabstandet ist (Vgl. Figur 3b), und einer ausgefahrenen Position, in welcher der Aufstechdorn 73 das Dichtelement 18 durchsticht (Vgl. Figur 3c) und bis in die Kartuschenöffnung 63 bzw. in das Reservoir 6 ragt, perforiert.

Die Außenwandung des Aufstechdorns 73 ist mit der Mehrzahl von Seitenkanälen 82 zum Leiten der Getränkesubstanz 7 in Richtung der Mischkammer 8, wenn das Dichtelement 18 durchstochen ist, versehen. Die Seitenkanäle 82 sind in Form von parallel zueinander verlaufenden einseitig offenen Nuten ausgebildet. Nach dem Durchstechen des Dichtelements 18 gelangen die Seitenkanäle 82 in Fluidverbindung mit dem Reservoir 6, so dass die Getränkesubstanz 7 die Ränder des durchstochenen Dichtelements 18 in Richtung der Mischkammer 8 umfließen kann.

Der Querschnitt der Seitenkanäle 82 und/oder die Anzahl der Seitenkanäle 82 ist dabei vorzugsweise an die Viskosität der Getränkesubstanz 7 angepasst ist, so dass die Seitenkanäle 82 den Fluss der Getränkesubstanz 7 in Richtung Mischkammer 8 kontrollieren bzw. begrenzen. Bei einer hohen Viskosität werden mehrere Seitenkanäle 82 und/oder Seitenkanäle 82 mit größerem Querschnitt verwendet, während bei einer niedrigeren Viskosität weniger Seitenkanäle 82 und/oder Seitenkanäle 82 mit geringerem Querschnitt vorgesehen sind.

In den Aufstechdorn 73 ist ferner die Druckluftleitung 40 integriert. Die Druckluftleitung 40 mündet durch eine feststehende Druckluftspitze 72 am Ende des Aufstechdorns 73 in die Kartuschenöffnung 63. Die Druckluftspitze 72 ragt automatisch in die Kartuschenöffnung 63, wenn der Aufstechdorn 73 in die ausgefahrene Position verschoben wurde.

An einer dem Reservoir 6 insbesondere abgewandten Seite des Aufstechdorns 73 ist der Druckluftanschluss 42 ausgebildet, der somit von außerhalb der Kartuschenaufnahme 10 zugänglich und an die Druckluftquelle 41 der Getränkezubereitungsmaschine 3 anschließbar ist. Vorzugsweise wird der Aufstechdorn 73 beim oder nach dem Einsetzen des Kartuschensystems 10 in die Getränkezubereitungsmaschine 3 oder nach dem Starten des Getränkeherstellungsprozesses von der eingefahrenen Position in die ausgefahrene Position überführt, vorzugsweise durch Druckluft, die beim Anschließen der Druckluftquelle 41 an den Druckluftanschluss 42, der am unteren Ende des Aufstechdorns 73 ausgebildet ist, in die Kartuschenentladeeinrichtung 34 einströmt.

Es ist vorzugsweise vorgesehen, dass sowohl die Fluidquelle 91 als auch die Druckluftquelle 41 direkt an die Fluidzuführung 12 bzw. den Druckluftanschluss 42 angekoppelt werden, sobald das Kartuschensystem 1 in die Getränkezubereitungsmaschine 3 eingesetzt wird oder ein Getränkeherstellungsprozess gestartet wird und insbesondere bevor das Dichtelement 18 durchstochen wird. Auf diese Weise wird eine Rückkontamination in Richtung der Getränkezubereitungsmaschine 3 wirksam vermieden, weil die Fluidzuführung 12 und die Kartuschenentladeeinrichtung 34 sofort beim Einsetzen des Kartuschensystems 1 unter Überdruck steht und somit verhindert wird, dass Getränkesubstanz 7 in Richtung der Fluidquelle 91 bzw. Druckluftquelle 41 wandert. Die Getränkesubstanz 7 kann sich ausgehend vom Reservoir 6 somit lediglich in Richtung der Mischkammer 8 bewegen, sobald das Dichtelement 18 geöffnet wird.

In **Figuren 4a** ist schematische Ansicht einer Kartuschenaufnahme 10 und eines Kartuschensystems 1 gemäß einer Ausführungsform der vorliegenden Erfindung eingesetzt in eine Halteeinheit 90 einer Getränkezubereitungsmaschine 3 dargestellt. In **Figur 4b** ist eine Detailansicht der Halteeinheit 90 gezeigt, welche im Wesentlichen aus einer Aufnahme für die Kartuschenaufnahme 10 besteht, sowie eine zur Fluidquelle 91 der Getränkezubereitungsmaschine 3 laufende Leitung zum Anschluss an die Fluidzuführung des Kartuschensystems 1 umfasst.

Die Halteeinheit 90 weist insbesondere einen Befestigungsflansch (nicht dargestellt) auf, welcher die Kartuschenaufnahme 10 nach dem Einsetzen in die Halteeinheit 90 formschlüssig umgreift. Die Halteeinheit 90 ist vorzugsweise manuell bedienbar, beispielsweise über einen Bedienhebel. Wenn ein Benutzer den Bedienhebel betätigt, wird die Kartuschenaufnahme 10 relativ zur Getränkezubereitungsmaschine 3 derart bewegt, dass das äußere Ende des Aufstechdorns 73 gegen ein feststehendes Auslöseelement (nicht dargestellt) der Halteeinheit 90 gedrückt wird, wodurch sich der Aufstechdorn 73 von der eingefahrenen Position in die ausgefahrene Position bewegt und das Dichtelement perforiert.

### Bezugszeichenliste

- 1: Kartuschensystem
- 2: Kartusche
- 3: Getränkezubereitungsmaschine
- 6: Reservoir
- 7: Getränkesubstanz
- 8: Mischkammer
- 10: Kartuschenaufnahme
- 11: Getränkeauslauf
- 12: Fluidzuführung
- 18: Dichtelement
- 19: Weiteres Dichtelement
- 34: Kartuschenentladeeinrichtung
- 40: Druckluftleitung
- 41: Druckluftquelle
- 42: Druckluftanschluss
- 43: Druckluftauslass
- 50: Rastverbindung
- 51: Rastelemente
- 52: Halteflansch
- 63: Kartuschenöffnung
- 64: Vorsprung
- 82: Seitenkanal
- 70: Getränk
- 71: Seitenkanal
- 73: Aufstechdorn
- 80: Dornführung
- 82: Seitenkanal
- 90: Halteeinheit
- 91: Fluidquelle

## Patentansprüche

1. Kartuschenaufnahme (10) zur Herstellung eines Getränks (70) mittels einer Kartusche (2), die ein mit einer Getränkesubstanz (7) gefülltes Reservoir (6) umfasst, wobei die Kartuschenaufnahme (10) in eine Getränkezubereitungsmaschine (3) einsetzbar ist und mit einer Kartusche (2) verbindbar ist, wobei die Kartuschenaufnahme (10) eine mit dem Reservoir (6) in Fluidverbindung bringbare Mischkammer (8) und eine in die Mischkammer (8) mündende Fluidzuführung (12) aufweist, **dadurch gekennzeichnet, dass** die Kartuschenaufnahme (10) eine Kartuschenentladeeinrichtung (34), welche zum zumindest teilweisen Überführen der Getränkesubstanz (7) vom Reservoir (6) in die Mischkammer (8) vorgesehen ist, aufweist, wobei die Kartuschenentladeeinrichtung (34) einen Druckluftanschluss (42) zum Anschluss an die Druckluftquelle (41) und eine Druckluftleitung (40) umfasst, welche sich vom Druckluftanschluss (42) zu einem Druckluftauslass (43) erstreckt, und wobei der Druckluftauslass (43) insbesondere in Richtung des Reservoirs (6) der Kartusche (2) vorsteht, um Druckluft in das Reservoir (6) einzublasen.

2. Kartuschenaufnahme (10) nach Anspruch 1, wobei die Mischkammer (8) einen Getränkeauslauf (11) aufweist, durch welchen das aus einer Vermischung der Getränkesubstanz (7) mit dem Fluid gebildete Getränk (70) abgegeben wird, wobei die Kartuschenaufnahme (10) vorzugsweise derart ausgebildet ist, dass das Getränk (70) aus dem Getränkeauslauf (11) direkt in ein portables Gefäß einleitbar ist.

3. Kartuschenaufnahme (10) nach einem der vorhergehenden Ansprüche, wobei die Kartuschenaufnahme (10) mit der Kartusche (2) über eine Rastverbindung (50) lösbar verbindbar ist.

4. Kartuschenaufnahme (10) nach einem der vorhergehenden Ansprüche, wobei die Kartusche (2) eine mit dem Reservoir (6) in Fluidverbindung stehende Kartuschenöffnung (63) aufweist, wobei die Kartuschenöffnung (63) mit einem Dichtelement (18) verschlossen ist, wobei das Dichtelement (18) insbesondere eine Dichtfolie umfasst, die auf den Rand der Kartuschenöffnung (63) aufgebraucht und vorzugsweise aufgesiegelt ist.

5. Kartuschenaufnahme (10) nach Anspruch 4, wobei die Kartuschenaufnahme (10) eine Dornführung (80) und einen innerhalb der Dornführung (80) verschiebbar gelagerten Aufstechdorn (73) umfasst, wobei der Aufstechdorn (73) zwischen einer eingefahrenen Position, in welcher der Aufstechdorn (73) von dem Dichtelement (19) beabstandet ist, und einer ausgefahrenen Position, in welcher der Aufstechdorn (73) das Dichtelement (18) durchsticht und bis in das Reservoir (6) ragt, verschiebbar ist.

6. Kartuschenaufnahme (10) nach Anspruch 5, wobei in die Außenwandung des Aufstechdorns (73) wenigstens einen Seitenkanal (71) zum Leiten der Getränkesubstanz (7) in Richtung der Mischkammer (8), wenn das Dichtelement (18) durchstochen ist, eingebracht ist.

7. Kartuschenaufnahme (10) nach einem der Ansprüche 5 oder 6, wobei in den Aufstechdorn (73) die Druckluftleitung (40) integriert ist und wobei an einer dem Reservoir (6) insbesondere abgewandten Seite des Aufstechdorns (73) der Druckluftanschluss (42) ausgebildet ist, wobei der Druckluftanschluss (42) vorzugsweise von außerhalb der Kartuschenaufnahme (10) zugänglich ist.

8. Kartuschenaufnahme (10) nach einem der Ansprüche 5 bis 7, wobei der Aufstechdorn (73) beim Einsetzen des Kartuschensystems (1) in die Getränkezubereitungsmaschine von einem Auslöseelement der Getränkezubereitungsmaschine von der eingefahrenen Position in die ausgefahrene Position überführt wird.

9. Kartuschensystem (1) zur Herstellung eines Getränks (70), wobei das Kartuschensystem (1) in eine Getränkezubereitungsmaschine (3) einsetzbar ist, wobei das Kartuschensystem (1) eine Kartusche (2), die ein mit einer Getränkesubstanz (7) gefülltes Reservoir (6) umfasst, und eine mit der Kartusche (2) verbundene Kartuschenaufnahme (10) nach einem der vorhergehenden Ansprüche aufweist, wobei die Mischkammer (8) der Kartuschenaufnahme (10) eine Fluidzuführung (12), die in die Mischkammer (8) mündet, aufweist.

10. Kartuschensystem (1) nach Anspruch 9, wobei die Fluidzuführung (12) mit Fluid gespeist wird, welches durch ein Kühlaggregat gekühlt wird, wobei das Kühlaggregat Teil der Getränkezubereitungsmaschine oder eines mit der Getränkezubereitungsmaschine in Wirkverbindung stehenden separaten Kühlschranks ist.

11. Kartuschensystem (1) nach Anspruch 10, wobei das Kühlaggregat eine Kompressorkühleinheit umfasst.

12. Kartuschensystem (1) nach einem der Ansprüche 9 bis 10, wobei die Fluidzuführung (12) mit Fluid gespeist wird, welches durch einen Karbonisierer mit Kohlensäure versetzt wird.

13. Kartuschensystem (1) nach Anspruch 12, wobei der Karbonisierer Teil der Getränkezubereitungsmaschine (3) ist und wobei der Karbonisierer eine Aufnahme für eine CO₂-Patrone und eine Zuführeinrichtung zum Versetzen des Fluides mit CO₂ aus der CO₂-Patrone aufweist.

14. Getränkezubereitungsmaschine (3) zur Herstellung eines Getränks (70), in welche ein Kartuschensystem (1) nach einem der Ansprüche 9 bis 13 eingesetzt ist, wobei die Getränkezubereitungsmaschine (3) eine Halteeinheit (90) aufweist, in welche die mit der Kartusche (2) verbundene Kartuschenaufnahme (10) einsetzbar ist, eine Fluidquelle (91) zum Einspeisen des Fluids in eine Fluidzuführung (12) und eine Druckluftquelle (41) zum Einblasen von Druckluft in einen Druckluftanschluss (42).

15. Verfahren zur Herstellung eines Getränks (70) mit einem Kartuschensystem (1) nach einem der Ansprüche 9 bis 13, mit den folgenden Schritten:
- Einsetzen des Kartuschensystems (1) in eine Halteeinheit (90) einer Getränkezubereitungsmaschine (3),
- Überführen der Getränkesubstanz (7) aus dem Reservoir (6) der Kartusche (2) in die Mischkammer (8) der Kartuschenaufnahme (10) mittels der Kartuschenentladeeinrichtung (34),
- Einspeisen eines Fluides in die Mischkammer (8) mittels der Fluidzuführung (12),
- Ableiten des in der Mischkammer (8) durch Vermischung der Getränkesubstanz (7) mit dem Fluid erzeugten Getränks (70) mittels eines Getränkeauslaufs (11),
- wobei die Getränkesubstanz (7) durch Druckluft aus dem Reservoir (6) in die Mischkammer (8) überführt wird.

## Claims

1. Cartridge receptacle (10) for producing a beverage (70) by means of a cartridge (2) which comprises a reservoir (6) filled with a beverage substance (7), wherein the cartridge receptacle (10) is insertable into a beverage preparation machine (3) and is connectable to a cartridge (2), wherein the cartridge receptacle (10) has a mixing chamber (8) that is fluidically connectable to the reservoir (6) and a fluid feed (12) that leads into the mixing chamber (8), **characterized in that** the cartridge receptacle (10) has a cartridge emptying device (34) which is provided to at least partially transfer the beverage substance (7) from the reservoir (6) into the mixing chamber (8), wherein the cartridge emptying device (34) comprises a compressed-air connection (42) for connecting to the compressed-air source (41), and a compressed-air line (40) which extends from the compressed-air connection (42) to a compressed-air outlet (43), and wherein the compressed-air outlet (43) protrudes in particular in the direction of the reservoir (6) of the cartridge (2) in order to blow compressed air into the reservoir (6).

2. Cartridge receptacle (10) according to Claim 1, wherein the mixing chamber (8) has a beverage outlet (11) through which the beverage (70) formed from a blend of the beverage substance (7) with the fluid is discharged, wherein the cartridge receptacle (10) is preferably configured such that the beverage (70) is able to be introduced directly into a portable vessel from the beverage outlet (11).

3. Cartridge receptacle (10) according to one of the preceding claims, wherein the cartridge receptacle (10) is releasably connectable to the cartridge (2) via a latching connection (50).

4. Cartridge receptacle (10) according to one of the preceding claims, wherein the cartridge (2) has a cartridge opening (63) fluidically connected to the reservoir (6), wherein the cartridge opening (63) is closed by a sealing element (18), wherein the sealing element (18) comprises in particular a sealing foil which has been applied to and preferably sealed onto the edge of the cartridge opening (63).

5. Cartridge receptacle (10) according to Claim 4, wherein the cartridge receptacle (10) comprises a spike guide (80) and a piercing spike (73) mounted in a displaceable manner within the spike guide (80), wherein the piercing spike (73) is displaceable between a retracted position, in which the piercing spike (73) is spaced apart from the sealing element (18), and an extended position, in which the piercing spike (73) pierces the sealing element (18) and projects into the reservoir (6).

6. Cartridge receptacle (10) according to Claim 5, wherein at least one lateral channel (71) for conveying the beverage substance (7) in the direction of the mixing chamber (8) when the sealing element (18) has been pierced is incorporated in the outer wall of the piercing spike (73).

7. Cartridge receptacle (10) according to one of Claims 5 or 6, wherein the compressed-air line (40) is integrated into the piercing spike (73) and wherein the compressed-air connection (42) is formed on a side of the piercing spike (73) that is in particular remote from the reservoir (6), wherein the compressed-air connection (42) is preferably accessible from outside the cartridge receptacle (10) .

8. Cartridge receptacle (10) according to one of Claims 5 to 7, wherein the piercing spike (73) is transferred from the retracted position into the extended position by a release element of the beverage preparation machine when the cartridge system (1) is inserted into the beverage preparation machine.

9. Cartridge system (1) for producing a beverage (70), wherein the cartridge system (1) is insertable into a beverage preparation machine (3), wherein the cartridge system (1) has a cartridge (2), which comprises a reservoir (6) filled with a beverage substance (7), and a cartridge receptacle (10), connected to the cartridge (2), according to one of the preceding claims, wherein the mixing chamber (8) of the cartridge receptacle (10) has a fluid feed (12) that leads into the mixing chamber (8).

10. Cartridge system (1) according to Claim 9, wherein the fluid feed (12) is supplied with fluid which is cooled by a refrigeration unit, wherein the refrigeration unit is part of the beverage preparation machine or of a separate refrigerator operatively connected to the beverage preparation machine.

11. Cartridge system (1) according to Claim 10, wherein the refrigeration unit comprises a compressor cooling unit.

12. Cartridge system (1) according to one of Claims 9 to 10, wherein the fluid feed (12) is supplied with fluid to which carbon dioxide is added by a carbonator.

13. Cartridge system (1) according to Claim 12, wherein the carbonator is part of the beverage preparation machine (3), and wherein the carbonator has a receptacle for a CO₂ cartridge and a feeding device for adding CO₂ from the CO₂ cartridge to the fluid.

14. Beverage preparation machine (3) for producing a beverage (70), into which a cartridge system (1) according to one of Claims 9 to 13 is inserted, wherein the beverage preparation machine (3) has a retaining unit (90) into which the cartridge receptacle (10) connected to the cartridge (2) is insertable, a fluid source (91) for injecting the fluid into a fluid feed (12), and a compressed-air source (41) for blowing compressed air into a compressed-air connection (42).

15. Method for producing a beverage (70) with a cartridge system (1) according to one of Claims 9 to 13, comprising the following steps:
- inserting the cartridge system (1) into a retaining unit (90) of a beverage preparation machine (3),
- transferring the beverage substance (7) from the reservoir (6) of the cartridge (2) into the mixing chamber (8) of the cartridge receptacle (10) by means of the cartridge emptying device (34),
- injecting a fluid into the mixing chamber (8) by means of the fluid feed (12),
- discharging the beverage (70) created in the mixing chamber (8) by blending the beverage substance (7) with the fluid, by means of a beverage outlet (11),
- wherein the beverage substance (7) is transferred from the reservoir (6) into the mixing chamber (8) by compressed air.

## Revendications

1. Réceptacle de cartouche (10) pour la préparation d'une boisson (70) au moyen d'une cartouche (2), qui comprend un réservoir (6) rempli d'une substance pour boisson (7), le réceptacle de cartouche (10) étant apte à être inséré dans une machine de préparation de boisson (3) et étant apte à être relié à une cartouche (2), le réceptacle de cartouche (10) présentant une chambre de mélange (8) apte à être mise en communication fluidique avec le réservoir (6) et une amenée de fluide (12) débouchant dans la chambre de mélange (8), **caractérisé en ce que** le réceptacle de cartouche (10) présente un dispositif (34) de déchargement de cartouche, qui est prévu pour transférer au moins partiellement la substance pour boisson (7) depuis le réservoir (6) jusque dans la chambre de mélange (8), le dispositif (34) de déchargement de cartouche comprenant un raccord d'air comprimé (42) pour le raccordement à la source d'air comprimé (41) et une conduite d'air comprimé (40), qui s'étend depuis le raccord d'air comprimé (42) jusqu'à une sortie d'air comprimé (43), et dans lequel la sortie d'air comprimé (43) fait saillie notamment en direction du réservoir (6) de la cartouche (2) pour injecter de l'air comprimé dans le réservoir (6).

2. Réceptacle de cartouche (10) selon la revendication 1, dans lequel la chambre de mélange (8) présente une sortie de boisson (11) par laquelle est délivrée la boisson (70) formée par un mélange de la substance pour boisson (7) avec le fluide, le réceptacle de cartouche (10) étant de préférence conçu de telle sorte que la boisson (70) soit apte à être introduite directement dans un récipient portable à partir de la sortie de boisson (11).

3. Réceptacle de cartouche (10) selon l'une des revendications précédentes, le réceptacle de cartouche (10) étant apte à être relié de manière amovible à la cartouche (2) par une liaison par encliquetage (50).

4. Réceptacle de cartouche (10) selon l'une des revendications précédentes, dans lequel la cartouche (2) présente une ouverture de cartouche (63) en communication fluidique avec le réservoir (6), l'ouverture de cartouche (63) étant fermée par un élément d'étanchéité (18), l'élément d'étanchéité (18) comprenant notamment une feuille d'étanchéité qui est appliquée, et de préférence scellée, sur le bord de l'ouverture de cartouche (63).

5. Réceptacle de cartouche (10) selon la revendication 4, dans lequel le réceptacle de cartouche (10) comprend un guide de mandrin (80) et un mandrin de perçage (73) monté de manière coulissante à l'intérieur du guide de mandrin (80), le mandrin de perçage (73) étant apte à être déplacé entre une position rétractée, dans laquelle le mandrin de perçage (73) est espacé de l'élément d'étanchéité (19), et une position déployée dans laquelle le mandrin de perçage (73) perce l'élément d'étanchéité (18) et fait saillie jusque dans le réservoir (6).

6. Réceptacle de cartouche (10) selon la revendication 5, dans lequel au moins un canal latéral (71) est ménagé dans la paroi extérieure du mandrin de perçage (73) pour guider la substance de la boisson (7) en direction de la chambre de mélange (8) lorsque l'élément d'étanchéité (18) est percé.

7. Réceptacle de cartouche (10) selon l'une des revendications 5 ou 6, dans lequel la conduite d'air comprimé (40) est intégrée dans le mandrin de perçage (73) et dans lequel le raccord d'air comprimé (42) est formé sur un côté du mandrin de perçage (73), en particulier à l'opposé du réservoir (6), le raccord d'air comprimé (42) étant de préférence accessible depuis l'extérieur du réceptacle de cartouche (10).

8. Réceptacle de cartouche (10) selon l'une des revendications 5 à 7, dans lequel le mandrin de perçage (73) est transféré de la position rentrée à la position sortie par un élément de déclenchement de la machine de préparation de boissons lors de la mise en place du système de cartouche (1) dans la machine de préparation de boissons.

9. Système de cartouche (1) pour la préparation d'une boisson (70), le système de cartouche (1) étant apte à être inséré dans une machine de préparation de boisson (3), le système de cartouche (1) comprenant une cartouche (2) qui comprend un réservoir (6) rempli d'une substance pour boisson (7), et un réceptacle de cartouche (10) relié à la cartouche (2) selon l'une des revendications précédentes, la chambre de mélange (8) du réceptacle de cartouche (10) présentant une amenée de fluide (12) qui débouche dans la chambre de mélange (8).

10. Système de cartouches (1) selon la revendication 9, dans lequel l'amenée de fluide (12) est alimentée en un fluide qui est refroidi par un groupe de refroidissement, le groupe de refroidissement faisant partie de la machine de préparation de boissons ou d'un réfrigérateur séparé en connexion fonctionnelle avec la machine de préparation de boissons.

11. Système de cartouches (1) selon la revendication 10, dans lequel l'unité de refroidissement comprend une unité de refroidissement à compresseur.

12. Système de cartouches (1) selon l'une des revendications 9 à 10, dans lequel l'alimentation en fluide (12) est alimentée en un fluide gazéifié par un carbonateur.

13. Système de cartouches (1) selon la revendication 12, dans lequel le carbonateur fait partie de la machine de préparation de boissons (3) et dans lequel le carbonateur comprend un réceptacle pour une cartouche de CO₂ et un dispositif d'alimentation pour mélanger le fluide avec du CO₂ provenant de la cartouche de CO₂.

14. Machine de préparation de boissons (3) pour la préparation d'une boisson (70), dans laquelle est inséré un système de cartouche (1) selon l'une des revendications 9 à 13, la machine de préparation de boissons (3) présentant une unité de support (90) dans laquelle est apte à être inséré le réceptacle de cartouche (10) relié à la cartouche (2), une source de fluide (91) pour l'injection du fluide dans une amenée de fluide (12) et une source d'air comprimé (41) pour l'injection d'air comprimé dans un raccord d'air comprimé (42) .

15. Procédé de préparation d'une boisson (70) avec un système de cartouches (1) selon l'une des revendications 9 à 13, comprenant les étapes suivantes :
- mise en place du système de cartouches (1) dans une unité de support (90) d'une machine de préparation de boissons (3),
- transfert de la substance pour boisson (7) du réservoir (6) de la cartouche (2) dans la chambre de mélange (8) du réceptacle de la cartouche (10) au moyen du dispositif (34) de déchargement de cartouche,
- introduction d'un fluide dans la chambre de mélange (8) au moyen de l'amenée de fluide (12),
- évacuation de la boisson (70) produite dans la chambre de mélange (8) par mélange de la substance pour boisson (7) avec le fluide au moyen d'une sortie de boisson (11),
- la substance de la boisson (7) étant transférée par de l'air comprimé depuis le réservoir (6) jusque dans la chambre de mélange (8).
